# EUROPEAN PATENT APPLICATION

(11) **EP 4 718 215 A1**
(43) Date of publication of application: **01.04.2026**
(21) Application number: 25204466.4
(22) Date of filing: 24.09.2025
(51) Int. Cl.: G06F 3/01, G06F 1/16, G06F 1/32, G06F 1/3203, G06F 1/3206, G06F 1/3231, G06F 1/3234, G06F 1/3287, H04W 52/02

(54) **TRANSITIONING BETWEEN POWER STATES BASED ON ENVIRONMENTAL CONTEXT**

(30) Priority: 26.09.2024 US 202463699637 P; 01.07.2025 US 202519256671
(71) Applicant: Apple Inc., Cupertino, CA 95014 (US)
(72) Inventor: TRINH, Jessica, Cupertino, 95014 (US); BEHRINGER, Adam E., Cupertino, 95014 (US); KERSTEN, Jacob T., Cupertino, 95014 (US)
(74) Representative: Barton, Russell Glen

(57) **Abstract**

Some examples of the disclosure are directed to systems and methods for transitioning between power states based on environmental context. In some examples, the first electronic device includes a first power state and a second power state wherein the second power state is a higher power state than the first power state. In some examples, while in the first power state, the first electronic device detects information that satisfies one or more criteria, and as a result, the first electronic device transitions from the first power state to the second power state. In some examples, the first electronic device activates the one or more displays while in the second power state. In some examples, activating one or more displays while in the second power state allows the first electronic device reducing power usage of the first electronic device by only displaying information at a relevant time.

## Description

### Cross-Reference to Related Applications

This application claims the benefit of U.S. Provisional Application No. 63/699,637, filed September 26, 2024, and U.S. Patent Application No. 19/256,671, filed July 1, 2025, the contents of which are herein incorporated by reference in their entireties for all purposes.

### Field of the Disclosure

This relates generally to systems and methods of transitioning between power states based on environmental context. Specifically, this relates to activating one or more input devices or one or more displays based on environmental context.

### Background of the Disclosure

Some computer graphical environments provide two-dimensional and/or three-dimensional environments where at least some objects displayed for a user's viewing are virtual and generated by a computer. In some examples, the objects include one or more user interface elements displayed in response to one or more environmental contextual information.

### Summary of the Disclosure

Some examples of the disclosure are directed to systems and methods for transitioning between power states based on environmental context. Specifically, this relates to activating one or more input devices or one or more displays based on environmental context. In some examples, the first electronic device includes a first power state and a second power state wherein the second power state is a higher power state than the first power state. In some examples, while in the first power state, the first electronic device detects information that satisfies one or more criteria, and as a result, the first electronic device transitions from the first power state to the second power state. In some examples, the first electronic device activates the one or more displays while in the second power state. In some examples, activating one or more displays after detecting information that satisfies one or more criteria to transition the first electronic device to the second power state allows the first electronic device to only turn on the one or more displays and/or display relevant content at opportune times, thereby reducing power usage of the first electronic device.

The full descriptions of these examples are provided in the Drawings and the Detailed Description, and it is understood that this Summary does not limit the scope of the disclosure in any way.

### Brief Description of the Drawings

For improved understanding of the various examples described herein, reference should be made to the Detailed Description below along with the following drawings. Like reference numerals often refer to corresponding parts throughout the drawings.
FIG. 1 illustrates an electronic device presenting an extended reality environment according to some examples of the disclosure.
FIG. 2A-2B illustrate block diagrams of an example architecture for a device according to some examples of the disclosure.
FIGs. 3A-3D illustrate an example where a first electronic device transitions between different power states based on information gathered from one or more input devices according to some examples of the disclosure.
FIGs. 4A-4C illustrate a different example where an electronic device transitions from the first power state to the second power state based on information gathered from one or more input devices according to some examples of the disclosure.
FIGs. 5A-5B illustrate an example where an electronic device transitions from the first power state to the second power state based on non-contextual information gathered from one or more input devices according to some examples of the disclosure.
FIG. 6 illustrates a flow diagram illustrating an example process for transitioning the electronic device from the first power state to the second power state according to some examples of the disclosure.

### Detailed Description

Some examples of the disclosure are directed to systems and methods for transitioning between power states based on environmental context. Specifically, this relates to activating one or more input devices or one or more displays based on environmental context. In some examples, the first electronic device includes a first power state and a second power state wherein the second power state is a higher power state than the first power state. In some examples, while in the first power state, the first electronic device detects information that satisfies one or more criteria, and as a result, the first electronic device transitions from the first power state to the second power state. In some examples, the first electronic device activates the one or more displays while in the second power state. In some examples, activating one or more displays after detecting information that satisfies one or more criteria to transition the first electronic device to the second power state allows the first electronic device to only turn on the one or more displays and/or display relevant content at opportune times, thereby reducing power usage of the first electronic device.

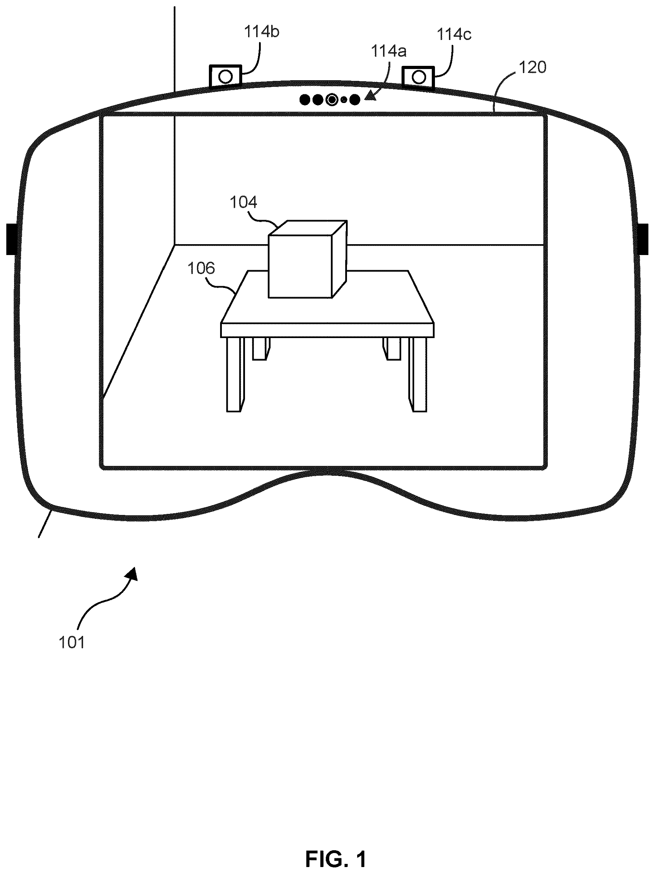

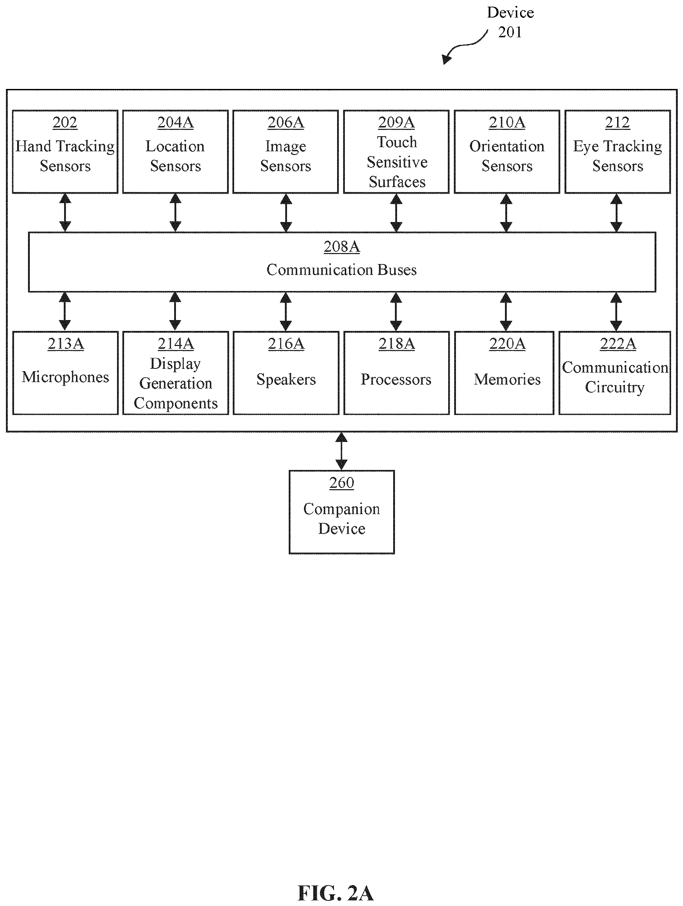

FIG. 1 illustrates an electronic device 101 presenting an extended reality (XR) environment (e.g., a computer-generated environment optionally including representations of physical and/or virtual objects) according to some examples of the disclosure. In some examples, as shown in FIG. 1, electronic device 101 is a head-mounted display or other head-mountable device configured to be worn on a head of a user of the electronic device 101. Examples of electronic device 101 are described below with reference to the architecture block diagram of FIG. 2A. As shown in FIG. 1, electronic device 101 and table 106 are located in a physical environment. The physical environment may include physical features such as a physical surface (e.g., floor, walls) or a physical object (e.g., table, lamp, etc.). In some examples, electronic device 101 may be configured to detect and/or capture images of physical environment including table 106 (illustrated in the field of view of electronic device 101).

In some examples, as shown in FIG. 1, electronic device 101 includes one or more internal image sensors 114a oriented towards a face of the user (e.g., eye tracking cameras described below with reference to FIGs. 2A-2B). In some examples, internal image sensors 114a are used for eye tracking (e.g., detecting a gaze of the user). Internal image sensors 114a are optionally arranged on the left and right portions of display 120 to enable eye tracking of the user's left and right eyes. In some examples, electronic device 101 also includes external image sensors 114b and 114c facing outwards from the user to detect and/or capture the physical environment of the electronic device 101 and/or movements of the user's hands or other body parts.

In some examples, display 120 has a field of view visible to the user (e.g., that may or may not correspond to a field of view of external image sensors 114b and 114c). Because display 120 is optionally part of a head-mounted device, the field of view of display 120 is optionally the same as or similar to the field of view of the user's eyes. In other examples, the field of view of display 120 may be smaller than the field of view of the user's eyes. In some examples, electronic device 101 may be an optical see-through device in which display 120 is a transparent or translucent display through which portions of the physical environment may be directly viewed. In some examples, display 120 may be included within a transparent lens and may overlap all or only a portion of the transparent lens. In other examples, electronic device may be a video-passthrough device in which display 120 is an opaque display configured to display images of the physical environment captured by external image sensors 114b and 114c. While a single display 120 is shown, it should be appreciated that display 120 may include a stereo pair of displays. In FIGs. 2A-2B, the display 120 includes or corresponds to a transparent or translucent surface (e.g., a lens) that is not equipped with display capability (e.g., and is therefore unable to generate and display the virtual object 104) and alternatively presents a direct view of the physical environment in the user's field of view (e.g., the field of view of the user's eyes).

In some examples, the electronic device 101 is configured to display (e.g., in response to a trigger) a virtual object 104 in the three-dimensional environment. Virtual object 104 is represented by a cube illustrated in FIG. 1, which is not present in the physical environment, but is displayed in the three-dimensional environment positioned on the top of table 106 (e.g., real-world table or a representation thereof). Optionally, virtual object 104 is displayed on the surface of the table 106 in the three-dimensional environment displayed via the display 120 of the electronic device 101 in response to detecting the planar surface of table 106 in the physical environment 100.

It is understood that virtual object 104 is a representative virtual object and one or more different virtual objects (e.g., of various dimensionality such as two-dimensional or other three-dimensional virtual objects) can be included and rendered in a three-dimensional environment. For example, the virtual object can represent an application or a user interface displayed in the three-dimensional environment. In some examples, the virtual object can represent content corresponding to the application and/or displayed via the user interface in the three-dimensional environment. In some examples, the virtual object 104 is optionally configured to be interactive and responsive to user input (e.g., air gestures, such as air pinch gestures, air tap gestures, and/or air touch gestures), such that a user may virtually touch, tap, move, rotate, or otherwise interact with, the virtual object 104.

As discussed herein, one or more air pinch gestures performed by a user (e.g., with hand 103 in FIG. 1) are detected by one or more input devices of electronic device 101 and interpreted as one or more user inputs directed to content displayed by electronic device 101. Additionally or alternatively, in some examples, the one or more user inputs interpreted by the electronic device 101 as being directed to content displayed by electronic device 101 (e.g., the virtual object 104) are detected via one or more hardware input devices (e.g., controllers, touch pads, proximity sensors, buttons, sliders, knobs, etc.) rather than via the one or more input devices that are configured to detect air gestures, such as the one or more air pinch gestures, performed by the user. Such depiction is intended to be exemplary rather than limiting; the user optionally provides user inputs using different air gestures and/or using other forms of input.

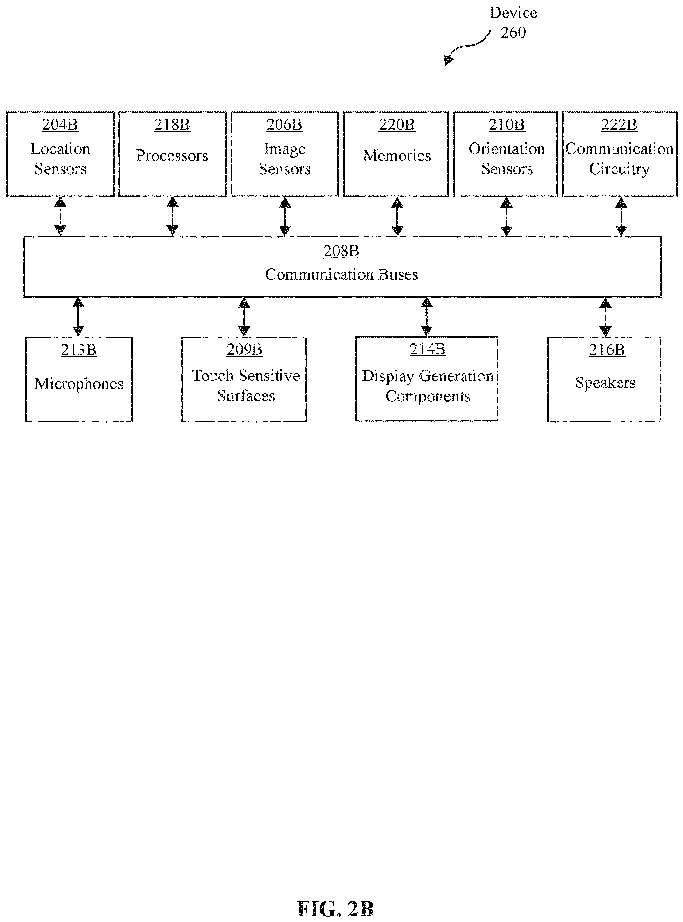

In some examples, the electronic device 101 may be configured to communicate with a second electronic device, such as a companion device. For example, as illustrated in FIG. 1, the electronic device 101 is optionally in communication with electronic device 160. In some examples, electronic device 160 corresponds to a mobile electronic device, such as a smartphone, a tablet computer, a smart watch, a laptop computer, or other electronic device. In some examples, electronic device 160 corresponds to a non-mobile electronic device, which is generally stationary and not easily moved within the physical environment (e.g., desktop computer, server, etc.). Additional examples of electronic device 160 are described below with reference to the architecture block diagram of FIG. 2B. In some examples, the electronic device 101 and the electronic device 160 are associated with a same user. For example, in FIG. 1, the electronic device 101 may be positioned on (e.g., mounted to) a head of a user and the electronic device 160 may be positioned near electronic device 101, such as in a hand 103 of the user (e.g., the hand 103 is holding the electronic device 160), a pocket or bag of the user, or a surface near the user. The electronic device 101 and the electronic device 160 are optionally associated with a same user account of the user (e.g., the user is logged into the user account on the electronic device 101 and the electronic device 160). Additional details regarding the communication between the electronic device 101 and the electronic device 160 are provided below with reference to FIGs. 2A-2B.

In some examples, displaying an object in a three-dimensional environment is caused by or enables interaction with one or more user interface objects in the three-dimensional environment. For example, initiation of display of the object in the three-dimensional environment can include interaction with one or more virtual options/affordances displayed in the three-dimensional environment. In some examples, a user's gaze may be tracked by the electronic device as an input for identifying one or more virtual options/affordances targeted for selection when initiating display of an object in the three-dimensional environment. For example, gaze can be used to identify one or more virtual options/affordances targeted for selection using another selection input. In some examples, a virtual option/affordance may be selected using hand-tracking input detected via an input device in communication with the electronic device. In some examples, objects displayed in the three-dimensional environment may be moved and/or reoriented in the three-dimensional environment in accordance with movement input detected via the input device.

In the descriptions that follows, an electronic device that is in communication with one or more displays and one or more input devices is described. It is understood that the electronic device optionally is in communication with one or more other physical user-interface devices, such as a touch-sensitive surface, a physical keyboard, a mouse, a joystick, a hand tracking device, an eye tracking device, a stylus, etc. Further, as described above, it is understood that the described electronic device, display and touch-sensitive surface are optionally distributed between two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device, or touch input received on the surface of a stylus) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

FIGs. 2A-2B illustrate block diagrams of example architectures for electronic devices according to some examples of the disclosure. In some examples, electronic device 201 and/or electronic device 260 include one or more electronic devices. For example, the electronic device 201 may be a portable device, an auxiliary device in communication with another device, a head-mounted display, a head-worn speaker, etc., respectively. In some examples, electronic device 201 corresponds to electronic device 101 described above with reference to FIG. 1. In some examples, electronic device 260 corresponds to electronic device 160 described above with reference to FIG. 1.

As illustrated in FIG. 2A, the electronic device 201 optionally includes one or more sensors, such as one or more hand tracking sensors 202, one or more location sensors 204A, one or more image sensors 206A (optionally corresponding to internal image sensors 114a and/or external image sensors 114b and 114c in FIG. 1), one or more touch-sensitive surfaces 209A, one or more motion and/or orientation sensors 210A, one or more eye tracking sensors 212, one or more microphones 213A or other audio sensors, one or more body tracking sensors (e.g., torso and/or head tracking sensors), etc. The electronic device 201 optionally includes one or more output devices, such as one or more display generation components 214A, optionally corresponding to display 120 in FIG. 1, one or more speakers 216A, one or more haptic output devices (not shown), etc. The electronic device 201 optionally includes one or more processors 218A, one or more memories 220A, and/or communication circuitry 222A. One or more communication buses 208A are optionally used for communication between the above-mentioned components of electronic device 201.

Additionally, the electronic device 260 optionally includes the same or similar components as the electronic device 201. For example, as shown in FIG. 2B, the electronic device 260 optionally includes one or more location sensors 204B, one or more image sensors 206B, one or more touch-sensitive surfaces 209B, one or more orientation sensors 210B, one or more microphones 213B, one or more display generation components 214B, one or more speakers 216B, one or more processors 218B, one or more memories 220B, and/or communication circuitry 222B. One or more communication buses 208B are optionally used for communication between the above-mentioned components of electronic device 260.

The electronic devices 201 and 260 are optionally configured to communicate via a wired or wireless connection (e.g., via communication circuitry 222A, 222B) between the two electronic devices. For example, as indicated in FIG. 2A, the electronic device 260 may function as a companion device to the electronic device 201. For example, in some examples, the electronic device 260 processes sensor inputs from electronic devices 201 and 260 and/or generates content for display using display generation components 214A of electronic device 201.

Communication circuitry 222A, 222B optionally includes circuitry for communicating with electronic devices, networks, such as the Internet, intranets, a wired network and/or a wireless network, cellular networks, and wireless local area networks (LANs). Communication circuitry 222A, 222B optionally includes circuitry for communicating using near-field communication (NFC) and/or short-range communication, such as Bluetooth^{®}, etc. In some examples, communication circuitry 222A, 222B includes or supports Wi-Fi (e.g., an 802.11 protocol), Ethernet, ultra-wideband ("UWB"), high frequency systems (e.g., 900 MHz, 2.4 GHz, and 5.6 GHz communication systems), or any other communications protocol, or any combination thereof.

One or more processors 218A, 218B include one or more general processors, one or more graphics processors, and/or one or more digital signal processors. In some examples, one or more processors 218A, 218B include one or more microprocessors, one or more central processing units, one or more application-specific integrated circuits, one or more field-programmable gate arrays, one or more programmable logic devices, or a combination of such devices. In some examples, memories 220A and/or 220B are a non-transitory computer-readable storage medium (e.g., flash memory, random access memory, or other volatile or nonvolatile memory or storage) that stores computer-readable instructions configured to be executed by the one or more processors 218A, 218B to perform the techniques, processes, and/or methods described herein. In some examples, memories 220A and/or 220B can include more than one non-transitory computer-readable storage medium. A non-transitory computer-readable storage medium can be any medium (e.g., excluding a signal) that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on compact disc (CD), digital versatile disc (DVD), or Blu-ray technologies, as well as persistent solid-state memory such as flash, solid-state drives, and the like.

In some examples, one or more display generation components 214A, 214B include a single display (e.g., a liquid-crystal display (LCD), organic light-emitting diode (OLED), or other types of display). In some examples, the one or more display generation components 214A, 214B include multiple displays. In some examples, the one or more display generation components 214A, 214B can include a display with touch capability (e.g., a touch screen), a projector, a holographic projector, a retinal projector, a transparent or translucent display, etc. In some examples, the electronic device does not include one or more display generation components 214A or 214B. For example, instead of the one or more display generation components 214A or 214B, some electronic devices include transparent or translucent lenses or other surfaces that are not configured to display or present virtual content. However, it should be understood that, in such instances, the electronic device 201 and/or the electronic device 260 are optionally equipped with one or more of the other components illustrated in FIGs. 2A and 2B and described herein, such as the one or more hand tracking sensors 202, one or more eye tracking sensors 212, one or more image sensors 206A, and/or the one or more motion and/or orientations sensors 210A. Alternatively, in some examples, the one or more display generation components 214A or 214B are provided separately from the electronic devices 201 and/or 260. For example, the one or more display generation components 214A, 214B are in communication with the electronic device 201 (and/or electronic device 260), but are not integrated with the electronic device 201 and/or electronic device 260 (e.g., within a housing of the electronic devices 201, 260). In some examples, electronic devices 201 and 260 include one or more touch-sensitive surfaces 209A and 209B, respectively, for receiving user inputs, such as tap inputs and swipe inputs or other gestures (e.g., hand-based or finger-based gestures). In some examples, the one or more display generation components 214A, 214B and the one or more touch-sensitive surfaces 209A, 209B form one or more touch-sensitive displays (e.g., a touch screen integrated with each of electronic devices 201 and 260 or external to each of electronic devices 201 and 260 that is in communication with each of electronic devices 201 and 260).

Electronic devices 201 and 260 optionally include one or more image sensors 206A and 206B, respectively. The one or more image sensors 206A, 206B optionally include one or more visible light image sensors, such as charged coupled device (CCD) sensors, and/or complementary metal-oxide-semiconductor (CMOS) sensors operable to obtain images of physical objects from the real-world environment. The one or more image sensors 206A, 206B also optionally include one or more infrared (IR) sensors, such as a passive or an active IR sensor, for detecting infrared light from the real-world environment. For example, an active IR sensor includes an IR emitter for emitting infrared light into the real-world environment. The one or more image sensors 206A, 206B also optionally include one or more cameras configured to capture movement of physical objects in the real-world environment. The one or more image sensors 206A, 206B also optionally include one or more depth sensors configured to detect the distance of physical objects from electronic device 201, 260. In some examples, information from one or more depth sensors can allow the device to identify and differentiate objects in the real-world environment from other objects in the real-world environment. In some examples, one or more depth sensors can allow the device to determine the texture and/or topography of objects in the real-world environment. In some examples, the one or more image sensors 206A or 206B are included in an electronic device different from the electronic devices 201 and/or 260. For example, the one or more image sensors 206A, 206B are in communication with the electronic device 201, 260, but are not integrated with the electronic device 201, 260 (e.g., within a housing of the electronic device 201, 260). Particularly, in some examples, the one or more cameras of the one or more image sensors 206A, 206B are integrated with and/or coupled to one or more separate devices from the electronic devices 201 and/or 260 (e.g., but are in communication with the electronic devices 201 and/or 260), such as one or more input and/or output devices (e.g., one or more speakers and/or one or more microphones, such as earphones or headphones) that include the one or more image sensors 206A, 206B. In some examples, electronic device 201 or electronic device 260 corresponds to a head-worn speaker (e.g., headphones or earbuds). In such instances, the electronic device 201 or the electronic device 260 is equipped with a subset of the other components illustrated in FIGs. 2A and 2B and described herein. In some such examples, the electronic device 201 or the electronic device 260 is equipped with one or more image sensors 206A, 206B, the one or more motion and/or orientations sensors 210A, 210B, and/or speakers 216A, 216B.

In some examples, electronic device 201, 260 uses CCD sensors, event cameras, and depth sensors in combination to detect the physical environment around electronic device 201, 260. In some examples, the one or more image sensors 206A, 206B include a first image sensor and a second image sensor. The first image sensor and the second image sensor work in tandem and are optionally configured to capture different information of physical objects in the real-world environment. In some examples, the first image sensor is a visible light image sensor, and the second image sensor is a depth sensor. In some examples, electronic device 201, 260 uses the one or more image sensors 206A, 206B to detect the position and orientation of electronic device 201, 260 and/or the one or more display generation components 214A, 214B in the real-world environment. For example, electronic device 201, 260 uses the one or more image sensors 206A, 206B to track the position and orientation of the one or more display generation components 214A, 214B relative to one or more fixed objects in the real-world environment.

In some examples, electronic devices 201 and 260 include one or more microphones 213A and 213B, respectively, or other audio sensors. Electronic device 201, 260 optionally uses the one or more microphones 213A, 213B to detect sound from the user and/or the real-world environment of the user. In some examples, the one or more microphones 213A, 213B include an array of microphones (e.g., a plurality of microphones) that optionally operate in tandem, such as to identify ambient noise or to locate the source of sound in space of the real-world environment.

Electronic devices 201 and 260 include one or more location sensors 204A and 204B, respectively, for detecting a location of electronic device 201 and/or the one or more display generation components 214A and a location of electronic device 260 and/or the one or more display generation components 214B, respectively. For example, the one or more location sensors 204A, 204B can include a global positioning system (GPS) receiver that receives data from one or more satellites and allows electronic device 201, 260 to determine the absolute position of the electronic device in the physical world.

Electronic devices 201 and 260 include one or more orientation sensors 210A and 210B, respectively, for detecting orientation and/or movement of electronic device 201 and/or the one or more display generation components 214A and orientation and/or movement of electronic device 260 and/or the one or more display generation components 214B, respectively. For example, electronic device 201, 260 uses the one or more orientation sensors 210A, 210B to track changes in the position and/or orientation of electronic device 201, 260 and/or the one or more display generation components 214A, 214B, such as with respect to physical objects in the real-world environment. The one or more orientation sensors 210A, 210B optionally include one or more gyroscopes and/or one or more accelerometers.

Electronic device 201 includes one or more hand tracking sensors 202 and/or one or more eye tracking sensors 212, in some examples. It is understood, that although referred to as hand tracking or eye tracking sensors, that electronic device 201 additionally or alternatively optionally includes one or more other body tracking sensors, such as one or more leg, one or more torso and/or one or more head tracking sensors. The one or more hand tracking sensors 202 are configured to track the position and/or location of one or more portions of the user's hands, and/or motions of one or more portions of the user's hands with respect to the three-dimensional environment, relative to the one or more display generation components 214A, and/or relative to another defined coordinate system. The one or more eye tracking sensors 212 are configured to track the position and movement of a user's gaze (e.g., a user's attention, including eyes, face, or head, more generally) with respect to the real-world or three-dimensional environment and/or relative to the one or more display generation components 214A. In some examples, the one or more hand tracking sensors 202 and/or the one or more eye tracking sensors 212 are implemented together with the one or more display generation components 214A. In some examples, the one or more hand tracking sensors 202 and/or the one or more eye tracking sensors 212 are implemented separate from the one or more display generation components 214AIn some examples, electronic device 201 alternatively does not include the one or more hand tracking sensors 202 and/or the one or more eye tracking sensors 212. In some examples, the one or more display generation components 214A may be utilized by the electronic device 260 to provide a three-dimensional environment and the electronic device 260 may utilize input and other data gathered via the other one or more sensors (e.g., the one or more location sensors 204A, the one or more image sensors 206A, the one or more touch-sensitive surfaces 209A, the one or more motion and/or orientation sensors 210A, and/or the one or more microphones 213A or other audio sensors) of the electronic device 201 as input and data that is processed by the one or more processors 218B of the electronic device 260. Additionally or alternatively, electronic device 260 optionally does not include other components shown in FIG. 2B, such as the one or more location sensors 204B, the one or more image sensors 206B, the one or more touch-sensitive surfaces 209B, etc. In some such examples, the one or more display generation components 214A may be utilized by the electronic device 260 to provide a three-dimensional environment and the electronic device 260 may utilize input and other data gathered via the one or more motion and/or orientation sensors 210A (and/or the one or more microphones 213A) of the electronic device 201 as input.

In some examples, the one or more hand tracking sensors 202 (and/or other body tracking sensors, such as leg, torso and/or head tracking sensors) can use the one or more image sensors 206 (e.g., one or more IR cameras, 3D cameras, depth cameras, etc.) that capture three-dimensional information from the real-world including one or more body parts (e.g., hands, legs, or torso of a human user). In some examples, the hands can be resolved with sufficient resolution to distinguish fingers and their respective positions. In some examples, the one or more image sensors 206A are positioned relative to the user to define a field of view of the one or more image sensors 206A and an interaction space in which finger/hand position, orientation and/or movement captured by the image sensors are used as inputs (e.g., to distinguish from a user's resting hand or other hands of other persons in the real-world environment). Tracking the fingers/hands for input (e.g., gestures, touch, tap, etc.) can be advantageous in that it does not require the user to touch, hold or wear any sort of beacon, sensor, or other marker.

In some examples, the one or more eye tracking sensors 212 include at least one eye tracking camera (e.g., IR cameras) and/or illumination sources (e.g., IR light sources, such as LEDs) that emit light towards a user's eyes. The eye tracking cameras may be pointed towards a user's eyes to receive reflected IR light from the light sources directly or indirectly from the eyes. In some examples, both eyes are tracked separately by respective eye tracking cameras and illumination sources, and a focus/gaze can be determined from tracking both eyes. In some examples, one eye (e.g., a dominant eye) is tracked by one or more respective eye tracking cameras/illumination sources.

Electronic devices 201 and 260 are not limited to the components and configuration of FIGs. 2A-2B, but can include fewer, other, or additional components in multiple configurations. In some examples, electronic device 201 and/or electronic device 260 can each be implemented between multiple electronic devices (e.g., as a system). In some such examples, each of (or more of) the electronic devices may include one or more of the same components discussed above, such as various sensors, one or more display generation components, one or more speakers, one or more processors, one or more memories, and/or communication circuitry. A person or persons using electronic device 201 and/or electronic device 260, is optionally referred to herein as a user or users of the device.

Attention is now directed towards transitioning the first electronic device (e.g., electronic device 201) from a first power state to a second power state based on contextual information according to examples of the disclosure. In some examples, the first electronic device transitions states based on contextual information from the first electronic device or from a second electronic device (e.g., electronic device 260) in communication with the first electronic device. In some examples, the first electronic device is a wearable device with one or more output devices (e.g., a display and/or speakers), and the second electronic device includes one or more sensors that can be used to provide contextual information for the first electronic device. The contextual information is optionally based on one or more sensors of the first electronic device and one or more sensors of the second electronic device, as described in more detail herein. Obtaining information from one or more sensors of the second electronic device to determine contextual information for the first electronic device can improve user experience (e.g., to surface information to the user of the first electronic device at the correct time with little or no additional user input) and/or reduce power consumption, weight, and cost of the first electronic device by obtaining the information from one or more sensors of the second electronic device.

In some examples, the first electronic device transitions between different power states to save power. For example, the first electronic device receives data from the sensors of the second electronic device to provide contextual information, which enables the first electronic device to remain in a relatively lower power state (e.g., with one or more output devices in an off state, or a lower-power operating state, and with one or more sensors in an off state, or in a lower-power operating state). The first electronic can transition to a higher power state when the contextual information satisfies the one or more criteria. In some examples, the higher power state includes turning on or entering a higher-power state for the output devices or sensors, such as turning on the one or more displays, processing at a higher power (e.g., at a higher frequency than while in the low power state), having a higher refresh rate, and/or operating background applications. In some examples, transitioning to a higher power state (e.g., the second power state, as described below) includes turning on additional processors. For example, while in the lower power state, the electronic device uses a low power processor to monitor one or more sensors/input devices that operate at the lower power state and/or determine an environmental context of the electronic device. Transitioning to the higher power state includes activating additional processors (e.g., higher power processors) to monitor/operate the additional input devices. The power state of the electronic device, as described or used herein, is characterized by on an on/off state or operating rate of one or more output devices (e.g., displays, speakers, haptic drivers, etc.) of the first electronic device, by an on/off state or operating rate of one or more sensors (e.g., one or more input devices). As used herein, the on-off state refers to whether a component (e.g., input or output device) is supplied power to operate (in on state) or not (in off state), where power is supplied when the component receives a threshold voltage and/or current from a power supply). In some examples, while in a high-power state (e.g., the second state), more components of the first electronic device are in the on state than while in a low-power state (e.g., the first state).

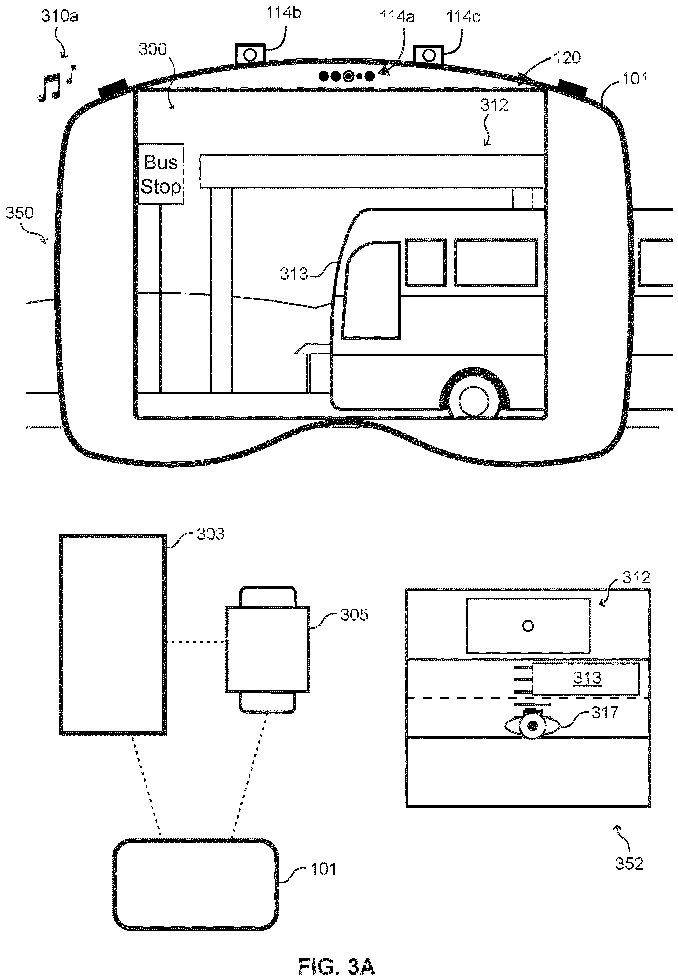

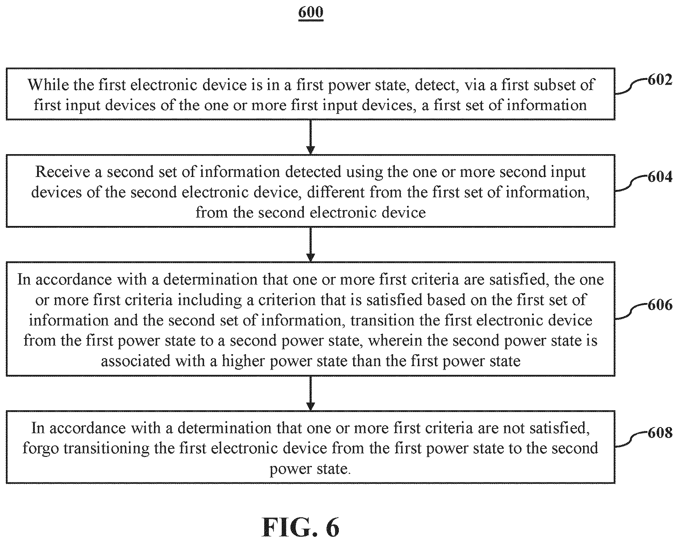

FIGs. 3A-3D illustrate an example where the first electronic device transitions between different power states based on information gathered from one or more input devices. FIGs. 3A-3D are used to illustrate the processes described below, including process 600, shown in FIG. 6. In some examples, and as shown in FIGs. 3A-3D, a user may have a routine to consume media (e.g., listen to music) while on their way to work. Using the one or more input devices at the first power state, the electronic device 101 may be able to determine the environmental context and initiate the process for the user to consume the respective media. In some examples, and as described below, the electronic device 101 may transition to the second power state to display one or more user interface elements to facilitate the user consuming media.

FIG. 3A illustrates an electronic device 101 presenting, via the display 120, a portion 300 of a physical environment 350 from a point of view of the user of the electronic device 101. In FIG. 3A, the electronic device 101 (e.g., corresponding to either electronic device 201/260) optionally presents portion 300 via a video pass-through or optical see-through display. FIG. 3A shows a user 317 of the electronic device 101 facing a bus stop 312 with a bus 313 approaching the bus stop.

In some examples, a viewpoint of a user influences what content (e.g., physical and/or virtual objects) is visible in a viewport (e.g., a view of the physical environment 350 visible to the user via one or more displays 120, a display, or a pair of display modules that provide stereoscopic content to different eyes of the same user). In some examples, the (virtual) viewport has a viewport boundary that defines an extent of the physical environment 350 that is visible to the user via the display 120 in FIGs. 3A-3D. In some examples, the region defined by the viewport boundary is smaller than a range of vision of the user in one or more dimensions (e.g., based on the range of vision of the user, size, optical properties or other physical characteristics of the one or more displays, and/or the location and/or orientation of the one or more displays relative to the eyes of the user). In some examples, the region defined by the viewport boundary is larger than a range of vision of the user in one or more dimensions (e.g., based on the range of vision of the user, size, optical properties or other physical characteristics of the one or more displays, and/or the location and/or orientation of the one or more displays relative to the eyes of the user). The viewport and viewport boundary typically move as the one or more displays move (e.g., moving with a head of the user for a head mounted device or moving with a hand of a user for a handheld device such as a tablet or smartphone). A viewpoint of a user influences what content is visible in the viewport, a viewpoint generally specifies a location and a direction relative to the physical environment 350, and as the viewpoint shifts, the view of the physical environment 350 will also shift in the viewport. For a head mounted device, a viewpoint is typically based on a location and a direction of the head, face, and/or eyes of a user to provide a view of the three-dimensional environment that is perceptually accurate and provides an immersive experience when the user is using the head-mounted device. For a handheld or stationed device, the viewpoint shifts as the handheld or stationed device is moved and/or as a position of a user relative to the handheld or stationed device changes (e.g., a user moving toward, away from, up, down, to the right, and/or to the left of the device). For devices that include displays with video passthrough, portions of the physical environment that are visible (e.g., displayed, and/or projected) via the one or more displays are based on a field of view of one or more cameras in communication with the displays which typically move with the displays (e.g., moving with a head of the user for a head-mounted device or moving with a hand of a user for a handheld device such as a tablet or smartphone) because the viewpoint of the user moves as the field of view of the one or more cameras moves (and the appearance of one or more virtual objects displayed via the one or more displays is updated based on the viewpoint of the user (e.g., displayed positions and poses of the virtual objects are updated based on the movement of the viewpoint of the user)). For displays with optical see-through, portions of the physical environment that are visible (e.g., optically visible through one or more partially or fully transparent portions of the display generation component) via the one or more displays are based on a field of view of a user through the partially or fully transparent portions of the display generation component (e.g., moving with a head of the user for a head mounted device or moving with a hand of a user for a handheld device such as a tablet or smartphone) because the viewpoint of the user moves as the field of view of the user through the partially or fully transparent portions of the displays moves (and the appearance of one or more virtual objects is updated based on the viewpoint of the user).

In FIG. 3A, the electronic device 101 is in communication with one or more additional devices (e.g., electronic device(s) 303 and/or 305). The combination of devices in communication with electronic device 101 is referred to as the computer system (e.g., electronic device(s) 101, 303, and 305). In some examples, electronic device(s) 303 and/or 305 have one or more characteristics of electronic device(s) 201 and/or 260. In some examples, electronic device 303 is a smartphone and electronic device 305 is a smart watch in communication with the electronic device 101. For example, electronic device(s) 101, 303, and/or 305 are in wireless (e.g., Bluetooth, Wi-Fi, and/or wireless network) communication or in a wired (e.g., via wires and/or cables, such as universal serial bus A (USB-A), universal serial bus C (USB-C), and/or ethernet) communication. In some examples, electronic device(s) 101, 303, and/or 305 share a common user account and/or a user (e.g., a common user/account uses the devices). For example, a user is optionally logged into one or more electronic devices using one user account (e.g., one username and password).

In some examples, the one or more electronic device(s) 101, 303, and/or 305 respectively include one or more sensors and/or one or more displays. For example, the electronic device(s) may include accelerometers, global positioning sensors (GPS), image sensors (image sensors 206A and/or 206B), orientation sensors (e.g., orientation sensors 210A and/or 210B), and/or location sensors (e.g., location sensors 204A and/or 204B). In some examples, while in the first power state, the electronic device 101 does not include a powered-on display, as shown in FIG. 3A. For example, in FIG. 3A, the electronic device 101 does not display content using display 120 and, instead, presents pass-through of the physical environment 350. While in the first power state, the electronic device(s) 101, 303, and/or 305 operates a first subset of input devices, such as microphones, GPS, location sensors, orientation sensors, accelerometers, and other background sensors. In some examples, while in the first power state, a second set of input devices that require more battery power are not active, such as image sensors, higher powered processors, and displays. In some examples, while in the first power state, the electronic device 101 senses using the first subset of input devices and receives sensor data relating to sounds, locations, orientation from input devices of the electronic device(s) 303 and/or 305.

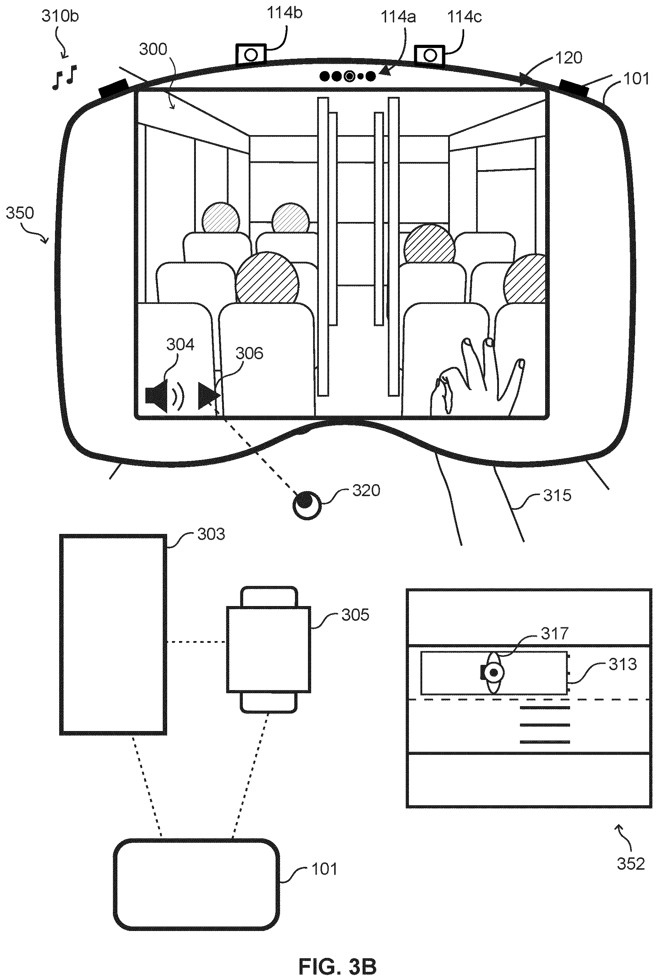

FIG. 3A illustrates an example where the user is at a bus stop to go to work. Representation 352 illustrates a top-down view of the physical environment 350 where the user 317 is walking towards the bus stop 312 to get on bus 313. As shown in FIG. 3A, the electronic device 101 presents a portion 300 of the physical environment 350 via the displays 120 including bus stop 312 and bus 313. In some examples, the electronic device(s) 101, 303, and/or 305 captures one or more sounds 310a of the physical environment 350 using a microphone. For example, the sounds relate to an outdoor environment in a city (e.g., bird sounds, car sounds, bus sounds, airplane sounds, and/or other city and outdoor sounds). In some examples, the electronic device(s) 101, 303, and/or 305 also captures location data using one or more location sensors which indicates that the user is at a bus stop 312. In some examples, the electronic device 101 and/or the computer system may store the data from the one or more sensors as historical data, which may be used to inform one or more future actions of the devices. For example, the electronic device(s) 101, 303, and/or 305 may use sound and/or location data to transition power states, as described in greater detail in FIGs. 3B-3D.

In the examples described herein, the computer system may be described as performing a function (e.g., the computer system storing historical data as described above). However, it should be known that any of the electronic devices described herein in communication with electronic device 101 can perform any or all of the steps that make up the respective function. For example, a computer system is comprised of electronic device 101, 303, and 305 and any of the electronic devices within the computer system can perform any or all of the steps that make up a respective function described herein.

In FIG. 3A, the electronic device 101 and/or the computer system detects that the one or more criteria to transition power states is not satisfied. In some examples, the one or more criteria to transition power states is based on one or more previous patterns of the user. For example, the electronic device 101 and/or the computer system does not detect (e.g., via sensors on the electronic device 101 or via sensors on electronic device(s) 303 and/or 305 that are in communication with electronic device 101) sounds that satisfy the criteria, a location that satisfies the criteria, and/or or that other criteria are satisfied. As described below, in FIG. 3B, the electronic device(s) 101, 303, and/or 305 detect data consistent with previous patterns of the user (e.g., satisfying the one or more criteria) that require the electronic device 101 to transition from the first power state to the second power state.

In FIG. 3B, the user is sitting on the bus 313 and the electronic device 101 presents a portion 300 of the physical environment 350 corresponding to the user sitting on the bus 313. In FIG. 3B, representation 352 illustrates that user 317 is on bus 313. Additionally, after detecting that the electronic device 101 (and the user of the electronic device 101) is on the bus 313, the electronic device 101 transitions to the second power state and displays user interface element 304 and 306 on display 120. In some examples, the one or more criteria are satisfied when the electronic device 101 and/or the computer system detects that the electronic device 101 is located on the bus 313. In some examples, the electronic device 101 and/or the computer system detects that the electronic device 101 is on the bus 313 because the electronic device(s) 101, 303, and/or 305 detect a change in sound (e.g., from sound 310a to sound 310b) that correspond with a user entering and being in a bus 313. Sound 310b may include sounds relating to being in a bus (e.g., people talking and bus sounds). In some examples, sound 310b may be quieter than sound 310a because being in the bus is a more ambient environment. In some examples, the electronic device(s) 101, 303 and/or 305 detect a change in acceleration/movement using an accelerometer, GPS, location sensor, and/or orientation sensor which is consistent with being on a vehicle (e.g., increased velocity and/or acceleration, a change in location, a change in orientation). Additionally, in some examples, the electronic device 101 detects that the electronic device 101 is at a specific location (e.g., on the bus 313) when the electronic device(s) 101, 303, 305 connect to a Wi-Fi network (e.g., a bus Wi-Fi network) corresponding to the specific location. Alternatively, or additionally, the one or more criteria are satisfied based on a time and/or a date. For example, based on previous user activity (e.g., user location data, sound data, movement data, calendar data, or other data), the electronic device 101 determines that the user enters the bus 313 at a specific time and/or date (e.g., at 8 am on Mondays through Fridays). In some examples, electronic device 101 may use position and/or orientation sensors to determine a position of the head of user 317. In some examples, electronic device 101 may use eye tracking and/or hand tracking sensors to determine one or more positions of the eyes of user 317. For example, the electronic device 101 may use head tracking sensors, hand tracking sensors, and eye tracking sensors to determine the environmental context (e.g., that a user is sitting in bus 313). In some examples, the electronic device 101 may use the one or more image sensors to capture an image of the physical environment 300 to determine the environmental context. In some examples, data from the first set of input devices of electronic device(s) 303 and/or 305 and data from the first set of input devices of electronic device 101 are used to determine whether the one or more criteria are satisfied.

In some examples, the electronic device 101 displays the user interface elements 304 and 306 in response to detecting that the one or more criteria are satisfied. In some examples, the user interface elements 304 and 306 correspond to a volume and play button (respectively) of a music application. In some examples, the electronic device 101 displays the user interface elements 304 and 306 in accordance with detecting that the user is on the bus 313 and/or based on historical data. In some examples, the electronic device 101 receives one or more inputs corresponding to a request to play music while on the bus 313 (e.g., the specific bus taken at a specific time and location and/or any bus taken by the user of the electronic device 101). In some examples, and as described above, the electronic device 101 and/or the computer system stores sensor data (e.g., from the sensors of electronic device 101 or of electronic device(s) 303 and/or 305) and determines a pattern based on the users' previous actions and corresponding respective sensor data. In some examples, the one or more criteria are dynamic based on the environmental context captured by the first set of one or more sensors. For example, the electronic device 101 and/or the computer system may recognize one or more patterns of the user (e.g., playing music on the bus 313, checking tasks at a location (e.g., an office location), turning on a do not disturb state at a specific time (e.g., bedtime), or other patterns). The respective patterns may include respective criteria (e.g., a time criteria, a sound criteria, a location criteria, and/or other criteria) to be satisfied to transition the electronic device 101 from the first power state to the second power state.

In some examples, the one or more criteria are based on one or more patterns of the user, as described above. Alternatively, or additionally, in some examples, the one or more criteria are based on user preference. For example, a user may set one or more actions for electronic device 101 (or electronic device(s) 303 and/or 305) to perform (e.g., at the second power state). For example, the user may request activation of a first application (e.g., running a background application and/or displaying a user interface of the first application) when at a specific location.

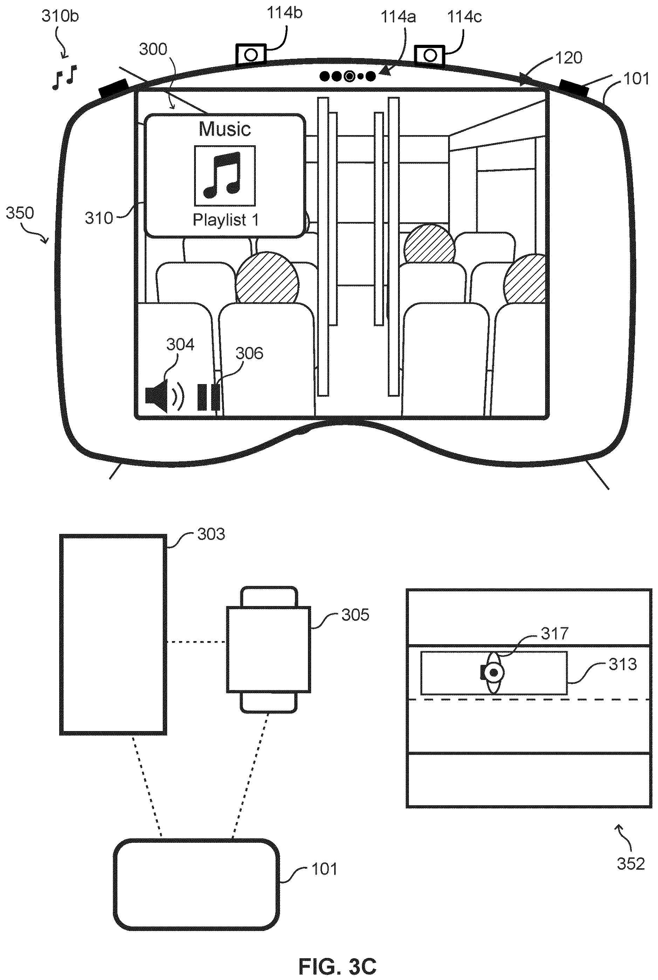

In FIG. 3B, while operating in the second power state and displaying user interface elements 304 and 306, the electronic device 101 receives a selection input directed towards user interface element 306. In some examples, and as shown in FIG. 3B, the input may be a gaze input using eyes 320. Alternatively or additionally, in some examples, the input may be an air-pinch input using hand 315, shown in FIG. 3B. Alternatively, or additionally, in some examples, the input may be a combination of a gaze input using eyes 320 and a predefined movement of hand 315. In response to receiving the input shown in FIG. 3B, the electronic device 101 begins displaying user interface element 310, shown in FIG. 3C.

In some examples, in response to detecting that the one or more criteria are satisfied, the electronic device 101 remains in the first power state while also running a background application. For example, rather than displaying user interface elements 304 and 306 in FIG. 3B, the electronic device 101 automatically begins playing music in response to determining that the one or more criteria are satisfied. In some examples, the electronic device 101 may reduce power consumption by forgoing activating the display 120 while also performing an action based on historical data and/or user preference.

FIG. 3C illustrates the electronic device 101 displaying user interface elements 310, 304, and 306 on the display 120. In FIG. 3C, the electronic device 101 updates the user interface element 306 to include an icon of a pause button instead of a play button, which is shown in FIG. 3B, to indicate that music is playing (e.g., using one or more speakers of electronic device 101 or one or more speakers of a device in communication with electronic device 101 (e.g., electronic device(s) 303 and/or 305)), and that further input directed to user interface element 306 will cause the electronic device 101 to pause the playback of the content. In FIG. 3C, the electronic device 101 also displays user interface element 310 including a representation of a playlist that is currently being played. In some examples, the electronic device 101 plays a curated playlist, resumes playing music that was previously paused, or plays a previously determined playlist (e.g., music in a music library, music in a liked songs playlist, or other playlists downloaded or saved to the music application/electronic device(s) 101, 303, or 305). In some examples, the curated playlist is based on historical data of types of music that are played in the same or similar contexts, such as while on the bus 313, at a given time, and/or at a given location. In some examples, the historical music data is based on metadata of the music previously played. For example, the electronic device 101 stores historical music data that indicates that happy pop music is frequently played while the electronic device 101 is on the bus 313. Because of this historical music data, the electronic device 101 curates a playlist including happy pop music to be played, as shown in FIG. 3C.

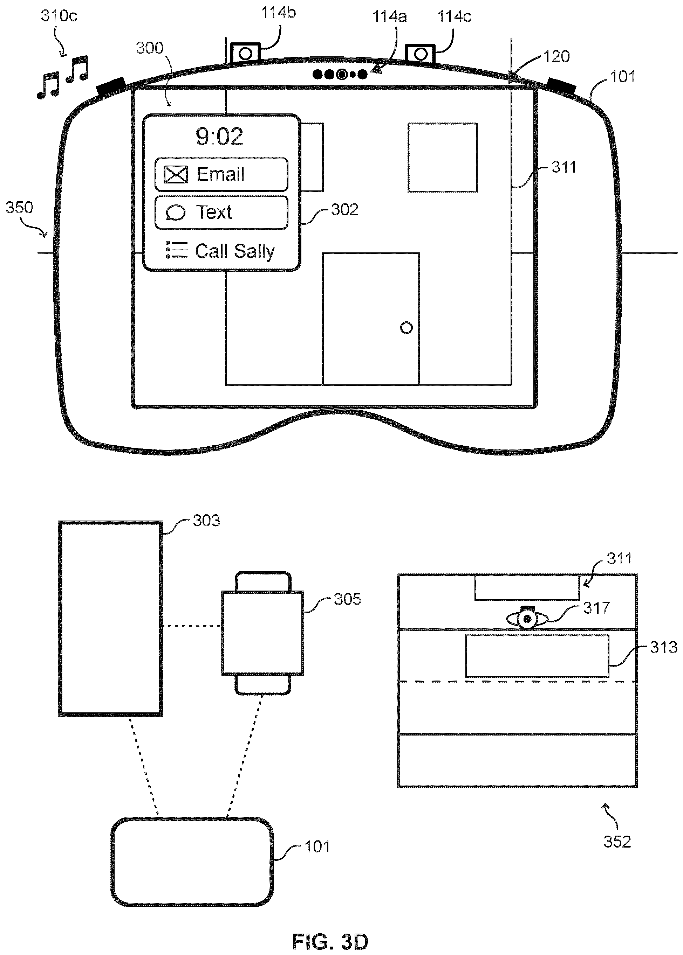

In FIG. 3D, the user arrives at their desired location and leaves the bus. Representation 352 illustrates the top-down view of physical environment 350 showing that the user is in front of building 311 and no longer on bus 313. In some examples, the electronic device 101 and/or the computer system determines that the user 317 is off the bus and at or within a threshold distance (e.g., 1 m, 5 m, 10 m, 100 m, or 500 m) of building 311 while in the first power state. For example, prior to displaying user interface element 302 and after displaying the user interface elements 310, 304, and 306 shown in FIG. 3C, the electronic device 101 transitions back to the first power state. In some examples, the electronic device 101 transitions from the second power state to the first power state after a threshold amount of time (e.g., 5 seconds, 10 seconds, 30 seconds, 1 minute, or 5 minutes) without detecting inputs directed towards the electronic device 101 (e.g., the electronic device 101 times out). In some examples, the electronic device 101 transitions from the second power state to the first power state when the one or more criteria are no longer satisfied (e.g., the electronic device(s) 101, 303, and/or 305 are no longer at the specific location, it is past the specific time, the one or more sounds are no longer detected, and/or the user 317 dismisses the user interface elements and/or turns off the display 120.

In some examples, and as described above, while in the first power state, the electronic device 101 uses data from microphones, location sensors, and/or orientation sensors (e.g., of electronic device 101 or of electronic device(s) 303 and/or 305) to determine an environmental context of the user 317. In some examples, the electronic device 101 determines that the sounds of the environment have changed from sounds 310b (e.g., sounds from inside bus 313) to sounds 310c (e.g., sounds from outside building 311). In some examples, the electronic device 101 also determines that the sounds 310c are consistent with historical sound data relating to the current location of the electronic device 101 (e.g., outside building 311). In some examples, the change in location, change in movement of the one or more electronic devices (e.g., electronic device(s) 101, 303, and/or 305), and/or change in sounds satisfies the one or more criteria. Additionally or alternatively, in some examples, the electronic device 101 uses one or more head tracking, hand tracking, and/or eye tracking sensors to determine the environmental context of the user 317. For example, the electronic device 101 uses the head tracking sensors to determine a position of a user's head (e.g., looking down to leave the bus). In some examples, the electronic device 101 uses one or more image sensors to determine the environmental context of the user. For example, the electronic device 101 uses the image sensors to capture an image of the physical environment 350, such as the portion 300 of the physical environment shown in FIG. 3D. In some examples, while in the first power state, the electronic device 101 operates image sensors, head tracking sensors, hand tracking sensors, eye tracking sensors at a lower frequency than while in the second power state. In response to determining that the one or more criteria are satisfied, the electronic device 101 transitions from the first power state to the second power state and displays user interface element 302, shown in FIG. 3D.

In some examples, and as described above, the one or more criteria are based on historical data. For example, building 311 is a frequently visited location (e.g., place of work of user 317) based on historical location data. For example, the electronic device(s) 101, 303, and/or 305 include historical location data based on one or more location sensors (e.g., GPS) that indicates that the user frequently visits building 311. In some examples, the historical location data includes time data of the visits (e.g., user 317 visits building 311 on Mondays through Fridays starting around 8 AM and leaving around 5 PM). In some examples, the electronic device(s) 101, 303, and/or 305 detect that while at a given time, at a given location, and/or after a specific action (e.g., at 8 AM at building 311 after the user 317 is no longer on bus 313), the user 317 uses the one or more devices to check an email application, a texting application, and/or a reminders application. In response to the historic data, the electronic device 101 displays user interface element 302 including indications of notifications from the one or more frequently visited applications while in front of building 311. In some examples, the electronic device 101 displays user interface element 302 based on user preferences. For example, and as described above, the user 317 may determine what indications are to be displayed on user interface elements 302.

In some examples, if the one or more criteria are not satisfied, then the electronic device 101 does not transition from the first power state to the second power state. For example, if the electronic device(s) 101, 303, and/or 305 do not detect that the user 317 is on bus 313 in FIG. 3B (e.g., using the one or more sensors as described above), then the electronic device 101 does not transition to the second power state and display user interface elements 304 and 306. Similarly, if the electronic device 101 detects that the user arrives at a location other than the location including building 311 shown in FIG. 3D at a respective time, then the electronic device 101 does not transition to the second power state and display user interface element 302. For example, the user 317 takes the bus in the morning and arrives at a second location at 8 AM, different than the location with building 311. In some examples, if the second location is associated with one or more historical patterns and the one or more criteria are satisfied, then the electronic device 101 transitions to the second power state and displays content relating to the second location.

In some examples, the one or more criteria change as the user's preferences and/or historical data changes. For example, if the user frequently dismisses/closes user interface elements 304 and 306 while on the bus 313, then the electronic device 101 may cease transitioning to the second power state while on bus 313 to display elements of the music application.

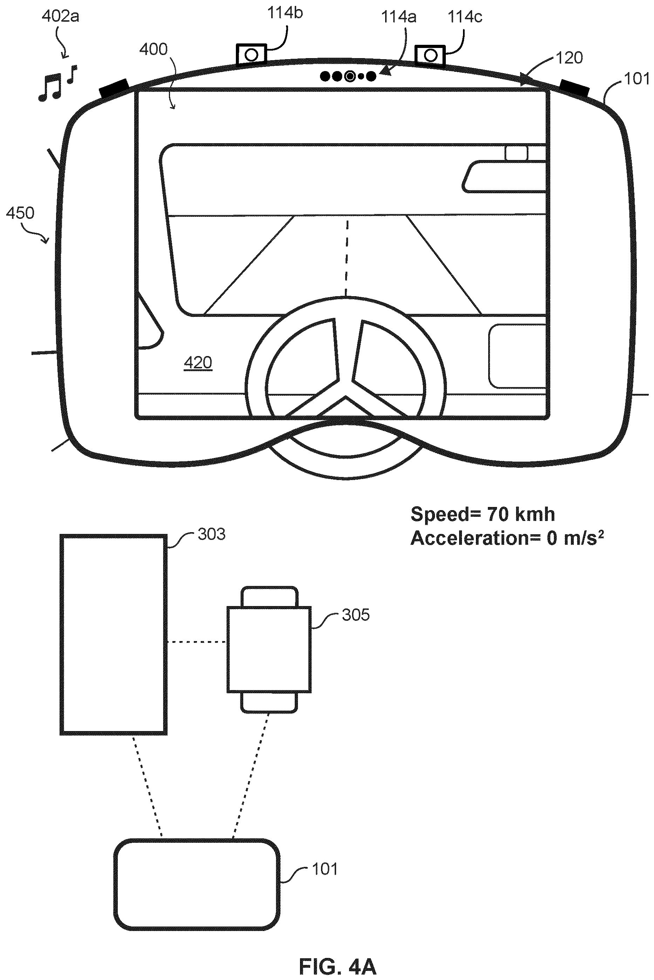

FIGs. 4A-4C illustrate a different example where the electronic device 101 transitions from the first power state to the second power state based on information gathered from one or more input devices. FIGs. 4A-4C are used to illustrate the processes described below, including process 600, shown in FIG. 6. In some examples, the user may be in a situation, such as a car problem, where it is advantageous to display additional information on the display 120 of electronic device 101. In some examples, using the one or more input sensors, the electronic device 101 may determine an environmental context and display relevant information as a result.

FIG. 4A illustrates the electronic device 101 presenting, via the display 120, a portion 400 of the physical environment 450 from a point of view of the user of the electronic device 101 via a pass-through or optical see-through display. FIG. 4A shows the user of the electronic device 101 while operating a car 420. The electronic device 101 is in communication with one or more additional devices, such as electronic device(s) 303 and/or 305, shown in FIG. 4A and described in greater detail above. In FIG. 4A, the sensors of electronic device(s) 101, 303, and/or 305 (e.g., accelerometer, and/or other location, orientation, or movement sensors) detect that the respective device is moving at 70 kmh with 0 m/s^2 of acceleration (e.g., because the user is driving at 70 kmh). In FIG. 4A, the sensors of electronic device(s) 101, 303, and/or 305 detect that the user is inside a car (e.g., sound 402a).

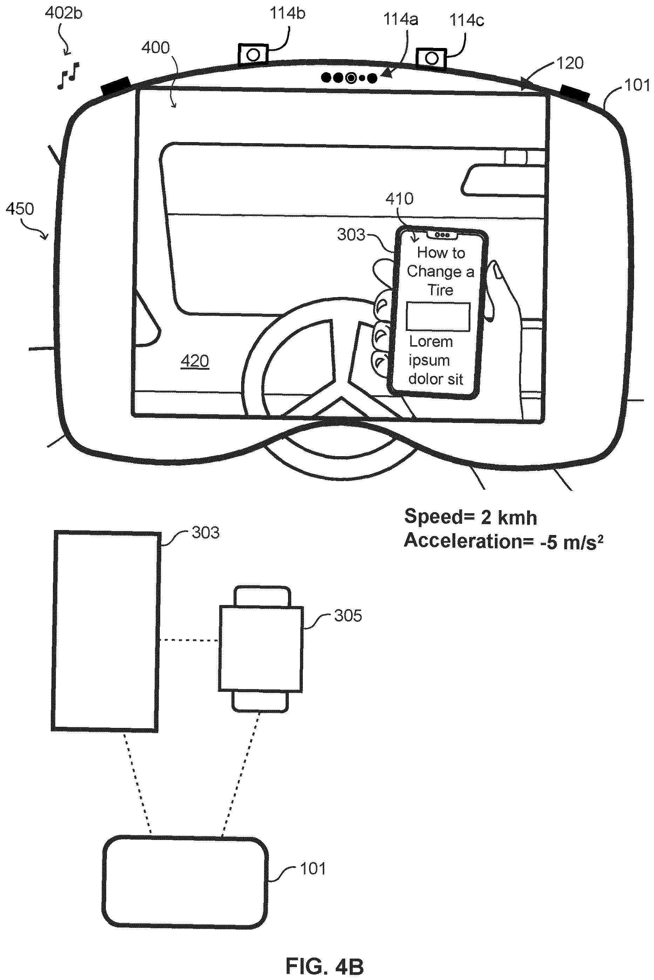

In FIG. 4B, the sensors of electronic device(s) 101, 303, and/or 305 detect a change in speed such that the respective device has a speed of 2 kmh and a deceleration of 5 m/s^2 (e.g., the car 420 is decelerating to no longer move). In some examples, a detected acceleration profile (e.g., change in speed) may correspond to a known acceleration profile, such as that of a flat tire event. Additionally, in some examples, the sensors of electronic device(s) 101, 303, and/or 305 detect a change in sound from sound 402a to sound 402b. In some examples, sound 402b includes a loud sound consistent with a flat tire. In some examples, the electronic device 101 detects the flat tire event using characteristic sounds from sound 402b that correspond to a flat tire. Additionally or alternatively, the user searches "how to change a tire" on an internet browser user interface 410 on electronic device 303, for example. In some examples, the user may perform the search on an internet browser user interface of electronic device 101 or of electronic device 305 additionally or alternatively. In some examples, the electronic device 101 may detect a sudden change in gaze, head movement, or hand movement using the head tracking, eye tracking, and/or hand tracking sensors that may be consistent with a flat tire.

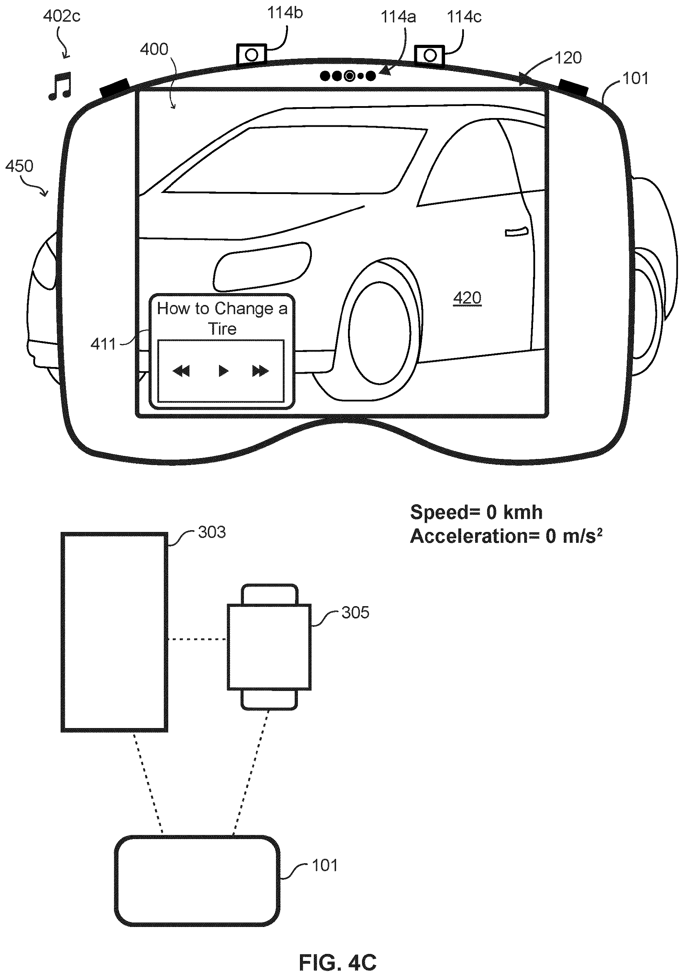

In FIG. 4C, the electronic device 101 transitions from the first power state to the second power state after determining that the one or more criteria are satisfied. In some examples, the one or more criteria are satisfied when the electronic device 101 determines that the confidence level to transition from the first power state to the second power state exceeds a confidence threshold (e.g., 51% confidence, 60% confidence, 75% confidence, 90% confidence, 95% confidence, or 99% confidence). In some examples, the confidence level is based on how likely a user is in a context where the electronic device 101 is able to display contextual information. For example, in FIG. 4C, the electronic device 101 and/or computer system detects, via the electronic device 303, that the user has searched "how to change a tire" on a web browser application. Additionally, the electronic device 101 and/or computer system detects, via the sensors of the electronic device 305, that the user is in a crouched position. For example, the electronic device 305 and/or computer system uses one or more location and orientation sensors to determine that the user is crouched. Additionally, the electronic device 101 and/or computer system detects, via a microphone (e.g., on electronic device 101, electronic device 303, and/or electronic device 305) that the sounds of the environment has changed to sounds 402c, which corresponds to outdoor sounds. Additionally, in some examples, the electronic device 101 and/or computer system uses the image sensors, head tracking sensors, eye tracking sensors, and/or hand tracking sensors to increase the confidence level to transition to the second power state. For example, the image sensors may indicate that the user is outside their car and/or looking at a flat tire. The eye tracking and/or head tracking sensors may indicate that the user is gazing at the flat tire. In some examples, the combination of information from sensor data indicates that the electronic device 101 is in a context where the confidence level exceeds the threshold confidence level and therefore, the electronic device 101 should transition from the first power state to the second power state. In some examples, the context where the confidence level exceeds the threshold confidence level includes a context where the user may require additional information (e.g., a video on how to change a tire, as shown in FIG. 4C), a context based on historical information (e.g., the context described in FIGs. 3A-3D), and/or a context where the electronic device 101 receives an indication from a second electronic device to be displayed on electronic device 101 (e.g., a notification from an application).

In FIG. 4C, the electronic device 101 displays, via display 120, user interface element 411 including a video for how to change a tire in accordance with the information from the combination of sensor data from the electronic device 101, electronic device 303, and electronic device 305. In some examples, the electronic device 101 displays user interface element 411 which improves user device interaction since the user is able to view information about changing a tire without having to use electronic device 303 and/or provide additional inputs to electronic device 101 to search information about changing a tire.

In some examples, the electronic device 101 does not display user interface element 411 in FIG. 4B because the confidence level has not yet exceeded the confidence threshold. For example, in FIG. 4B, the electronic device 101 and/or computer system detects the change in speed and the electronic device 303 data from the web browser application. However, the electronic device 101 does not detect a change in sound or the crouching action from the user. For example, the user may have assistance from another person to change the tire and therefore, the electronic device 101 does not need to display user interface element 411.

While FIGs. 4A-4C describe a flat tire example, similar actions may occur if the electronic device(s) 101, 303, and/or 305 detect a crash. For example, using the one or more sensors, the electronic device 101 and/or computer system may detect a crash (e.g., change in acceleration, increased force on electronic device 101, sounds, sudden change in head position). In response to detecting a crash, the electronic device 101 may transition from a first power state to a second power state and display relevant information for the crash (e.g., displaying insurance information and/or displaying a prompt including instructions for after a crash (e.g., collecting the other parties' information, taking pictures, and/or calling the police)).

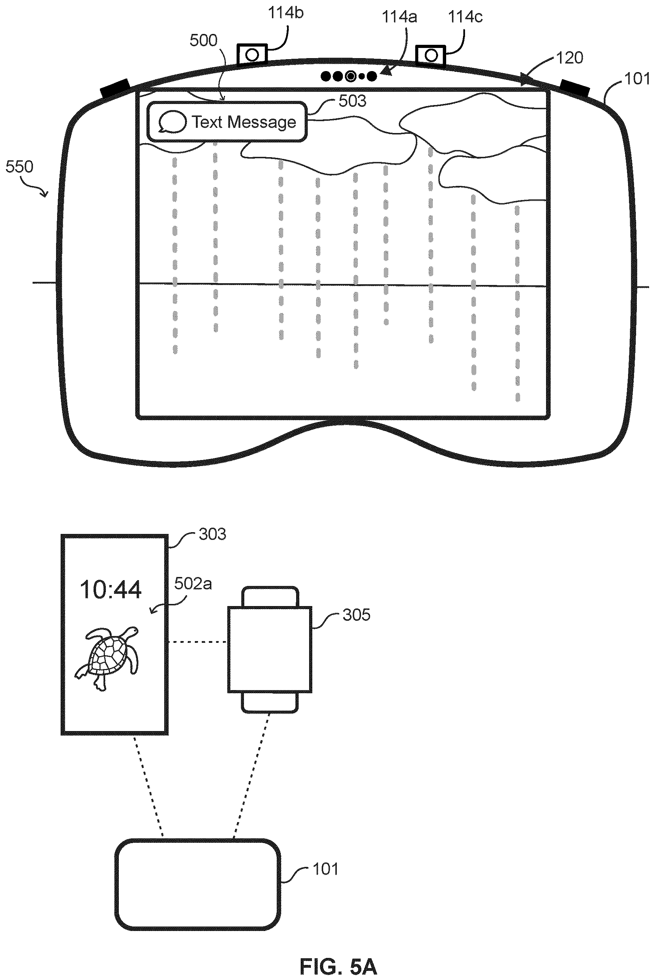

FIGs. 5A-5B illustrate an example where the electronic device 101 transitions from the first power state to the second power state based on non-contextual information gathered from one or more input devices. FIGs. 5A-5B are used to illustrate the processes described below, including process 600, shown in FIG. 6. In some examples, while the electronic device 101 is in a second power state, the electronic device 101 may opportunistically gather additional information about the user's environment to inform future actions.

FIG. 5A illustrates the electronic device 101 presenting, via the display 120, a portion 500 of the physical environment 550 from a point of view of the user of the electronic device 101 via a pass-through or optical see-through display. FIG. 5A shows the user of the electronic device 101 watching a rainstorm. The electronic device 101 is in communication with one or more additional devices, such as electronic device(s) 303 and/or 305, shown in FIG. 5A and described in greater detail above.

In FIG. 5A, the electronic device 101 and/or the computer system receives an indication of a text message from a messaging application. In response to receiving the indication, the electronic device 101 transitions from the first power state to the second power state to display, via the display 120, a visual indication 503 of the text message. In some examples, and as described in FIGs. 3A-3D and 4A-4C, the electronic device 101 transitions from the first power state to the second power state based on environmental context and/or historical data. In some examples, the electronic device 101 also transitions from the first power state to the second power state in response to receiving indications to be displayed on the electronic device 101 (e.g., normal operations of the electronic device 101). While the electronic device 101 is in the second power state, the electronic device 101 opportunistically uses the second subset of the one or more input devices that operate in the second power state to collect additional information. For example, the electronic device 101 activates the one or more image sensors (e.g., described in greater detail in FIG. 2) while operating in the second power state. In FIG. 5A, the one or more image sensors captures characteristics of the physical environment 550, such as the fact that it is raining. In some examples, the electronic device 101 and/or the computer system uses the additional processing power available while in the second power state to access the internet to gather weather data.

Additionally, as illustrated in FIG. 5A, the electronic device 303 includes a first wallpaper 502a. In some examples, the wallpaper 502a is computer-generated and/or user selected.

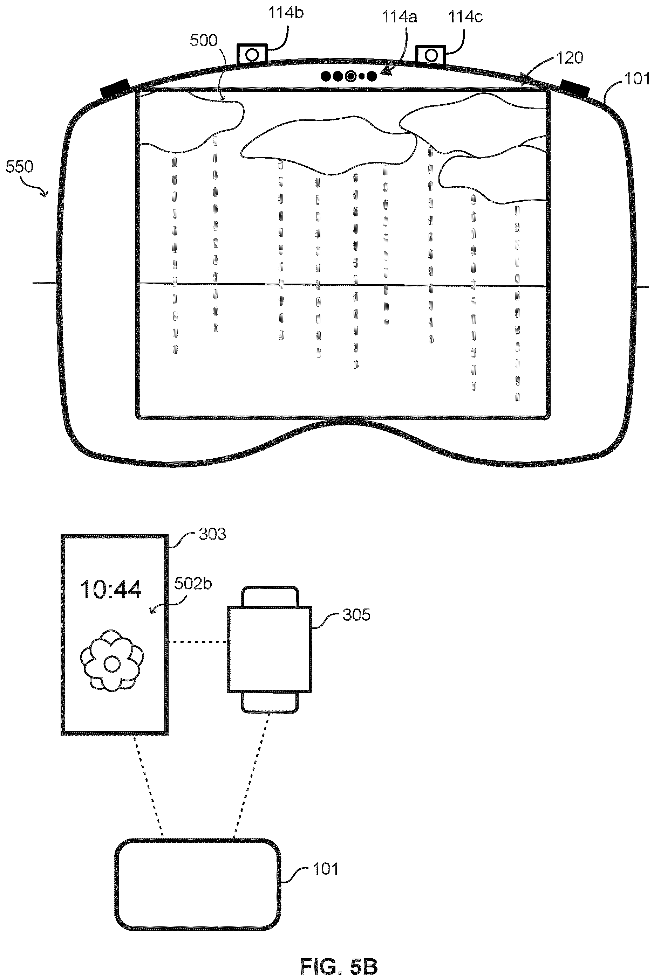

FIG. 5B illustrates the electronic device 303 updating the wallpaper from wallpaper 502a to wallpaper 502b in response to the information captured while the electronic device 101 was in the second power state in FIG. 5A. As described in FIG. 5A, the electronic device 101 captures contextual information using the additional input devices while the electronic device 101 was in the second power state. The electronic device 101 transmits the contextual information to the one or more devices in communication with electronic device 101 (e.g., electronic device(s) 303 and/or 305). In some examples, in response to receiving the contextual information, the electronic device 303 updates the wallpaper. In some examples, the electronic device 303 updates the wallpaper based on user preference or as a function of the computer-generated wallpaper. For example, a user may determine one or more wallpapers to be used during respective weather or the electronic device 303 may determine different wallpapers for respective weather.

In FIG. 5B, the electronic device 101 ceases displaying visual indication 503 and transitions back to the first power state. As described above, the electronic device 101 may transition from the second power state back to the first power state after a time threshold has passed without detecting user interaction with displayed elements or in response to a user input.

While FIGs. 5A-5B illustrate an example where opportunistic sensing causes an action on electronic device 303, in some examples, opportunistically sensing data while in the second power state may cause one or more actions to be performed on the electronic device 101, electronic device 303, and/or electronic device 305. While displaying non-contextual information on electronic device 101 while the electronic device 101 is in the second power state, the electronic device 101 may capture additional data that satisfies the one or more criteria, as described above. In response to satisfying the one or more criteria, the electronic device 101 may remain in the second power state to perform additional actions corresponding to satisfying the one or more criteria. In some examples, the electronic device(s) 303 and/or 305 may transition from the first power state to the second power state and perform opportunistic sensing that results in capturing additional data that satisfies the one or more criteria to transition electronic device 101 from the first power state to the second power state. For example, the electronic device 303 may receive and display a notification from a first application. While displaying the notification from the first application, the electronic device 303 detects additional data that causes the electronic device 101 to transition from the first power state to the second power state.

FIG. 6 illustrates a flow diagram illustrating an example process for transitioning the electronic device from the first power state to the second power state according to some examples of the disclosure. In some examples, process 600 begins at a first electronic device with one or more first displays and one or more input devices in communication with a second electronic device. In some examples, the second electronic device includes one or more second displays and one or more second input devices. In some examples, the first electronic device is optionally a head-mounted display similar or corresponding to electronic device 201 or 260 of FIG. 2 and electronic device 101 of FIG. 3A-3D, 4A-4C, and 5A-5B. As shown in FIG. 6, in some examples, at 602, while the first electronic device is in a first power state, the first electronic device detects, via a first subset of first input devices of the one or more first input devices, a first set of information. In some examples, the first subset of input devices includes location sensors, orientation sensors, microphones, and other low powered sensors, as described in FIG. 3A. In some examples, the first set of information includes information informing the electronic device 101 of the environmental context.

In some examples, at 604, the first electronic device (e.g., electronic device 101) receives a second set of information detected using the one or more second input devices of the second electronic device, different from the first set of information, from the second electronic device. In some examples, the electronic device 101 receives sensor data from input devices of one or more electronic devices in communication with the electronic device 101, such as electronic device 303 and/or electronic device 305, as described in greater detail in FIG. 3A and FIG. 4B. In some examples, the electronic device 101 may receive motion data from a smart watch, location data from a phone, or other data, as described above, to inform the environmental context.

In some examples, at 606, in accordance with a determination that one or more first criteria are satisfied, the one or more first criteria including a criterion that is satisfied based on the first set of information and the second set of information, the first electronic device (e.g., electronic device 101) transitions the first electronic device from the first power state to a second power state, wherein the second power state is associated with a higher power state than the first power state. In some examples, if the environmental context based on the first set of information and the second set of information satisfies the one or more criteria based on historical data, present sensor data and/or user preference, then the electronic device 101 transitions from the first power state to the second power state. As described in FIGs. 3A-3D, if previous historical data indicates patterns of the user, and if the environmental context corresponds to one or more of the patterns of the user, then the electronic device 101 transitions to the second power state to perform one or more actions. In some examples, and as described in FIG. 4A-4C, if a confidence level based on the environmental context (e.g., the one or more sensor data) exceeds a confidence threshold, then the electronic device 101 transitions to the second power state to display relevant information. In some examples, at 608, in accordance with a determination that one or more first criteria are not satisfied, the first electronic device (e.g., electronic device 101) forgoes transitioning the first electronic device from the first power state to the second power state.

It is understood that process 600 is an example and that more, fewer, or different operations can be performed in the same or in a different order. Additionally, the operations in process 600 described above are, optionally, implemented by running one or more functional modules in an information processing apparatus such as general-purpose processors (e.g., as described with respect to FIG. 2) or application specific chips, and/or by other components of FIG. 2. Additionally, in some examples, one or more operations described in process 600 are optionally performed at any of the electronic devices in the computer system (e.g., electronic device(s) 101, 303, and/or 305).

Therefore, according to the above, some examples of the disclosure are directed to a method, comprising at a first electronic device with one or more first displays and one or more first input devices in communication with a second electronic device with one or more second input devices: while the first electronic device is in a first power state, detecting, via a first subset of first input devices of the one or more first input devices, a first set of information; receiving a second set of information detected using the one or more second input devices of the second electronic device, different from the first set of information, from the second electronic device; in accordance with a determination that one or more first criteria are satisfied, the one or more first criteria including a criterion that is satisfied based on the first set of information and the second set of information, transitioning the first electronic device from the first power state to a second power state, wherein the second power state is associated with a higher power state than the first power state; and in accordance with a determination that one or more first criteria are not satisfied, forgoing transitioning the first electronic device from the first power state to the second power state. Additionally or alternatively to one of more of the examples disclosed above, in some examples, the first power state includes operating the first electronic device without operating the one or more first displays and the second power state includes operating the first electronic device including operating the one or more first displays. Additionally or alternatively to one of more of the examples disclosed above, in some examples, operating the one or more first displays while in the second power state includes displaying a first user interface on the one or more displays of the first electronic device wherein the first user interface is based on the first set of information and the second set of information. Additionally or alternatively to one of more of the examples disclosed above, in some examples, transitioning from the first power state to the second power state includes activating a first application and a second subset of the one or more first input devices, different from the first subset of the one or more first input devices. Additionally or alternatively to one of more of the examples disclosed above, in some examples, while in the first power state and the second power state, the first electronic device forgoes activating the one or more first displays. Additionally or alternatively to one of more of the examples disclosed above, in some examples, transitioning the first electronic device from the first power state to the second power state further comprises: activating a second subset of the one or more first input devices that were not active in the first power state; after activating the second subset of the one or more first input devices, detecting, via the second subset of the one or more first input devices, a third set of information, wherein the third set of information is used to inform one or more functions of the first electronic device and the second electronic device. Additionally or alternatively to one of more of the examples disclosed above, in some examples, the one or more first criteria include a second criterion that is satisfied based on one or more historical patterns of a user of the first electronic device. Additionally or alternatively to one of more of the examples disclosed above, in some examples, transitioning the first electronic device from the first power state to the second power state further comprises: in accordance with a determination that the first information and the second information correspond to a first context, displaying, via the one or more first displays, one or more first user interface elements corresponding to respective contextual information from the first information and the second information while in the second power state; and in accordance with a determination that the first information and the second information correspond to a second context, displaying, via the one or more first displays, one or more second user interface elements corresponding to the respective contextual information from the first information and the second information while in the second power state. Additionally or alternatively to one of more of the examples disclosed above, in some examples, transitioning the first electronic device from the first power state to the second power state further comprises: in accordance with a determination that the first information and the second information correspond to a first context, displaying, via the one or more first displays, one or more first user interface elements corresponding to respective non-contextual information from the first information and the second information while in the second power state; and in accordance with a determination that the first information and the second information correspond to a second context, displaying, via the one or more first displays, one or more second user interface elements corresponding to respective contextual information from the first information and the second information while in the second power state. Additionally or alternatively to one of more of the examples disclosed above, in some examples, the first subset of first input devices of the one or more first input devices includes an image sensor, a hand tracking sensor, and/or a head tracking sensor.

Some examples of the disclosure are directed to an electronic device, comprising: one or more processors; memory; and one or more programs stored in the memory and configured to be executed by the one or more processors, the one or more programs including instructions for performing any of the above methods.

Some examples of the disclosure are directed to a non-transitory computer readable storage medium storing one or more programs, the one or more programs comprising instructions, which when executed by one or more processors of an electronic device, cause the electronic device to perform any of the above methods.

Some examples of the disclosure are directed to an electronic device, comprising one or more processors, memory, and means for performing any of the above methods.

Some examples of the disclosure are directed to an information processing apparatus for use in an electronic device, the information processing apparatus comprising means for performing any of the above methods.

The present disclosure contemplates that in some instances, the data utilized may include personal information data that uniquely identifies or can be used to contact or locate a specific person. Such personal information data can include demographic data, content consumption activity, location-based data, telephone numbers, email addresses, twitter ID's, home addresses, data or records relating to a user's health or level of fitness (e.g., vital signs measurements, medication information, exercise information), date of birth, or any other identifying or personal information. Specifically, as described herein, one aspect of the present disclosure is tracking a user's location and/or sounds using a microphone.

The present disclosure recognizes that the use of such personal information data, in the present technology, can be used to the benefit of users. For example, personal information data may be used to display suggested text that changes based on changes in a user's biometric data. For example, the suggested text is updated based on changes to the user's age, height, weight, and/or health history.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates examples in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select not to enable recording of personal information data in a specific application (e.g., first application and/or second application). In addition to providing "opt in" and "opt out" options, the present disclosure contemplates providing notifications relating to the access or use of personal information. For instance, a user may be notified upon initiating collection that their personal information data will be accessed and then reminded again just before personal information data is accessed by the device(s).

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

The foregoing description, for purpose of explanation, has been described with reference to specific examples. However, the illustrative discussions above are not intended to be exhaustive or to limit the disclosure to the precise forms disclosed. Many modifications and variations are possible in view of the above teachings. The examples were chosen and described in order to best explain the principles of the disclosure and its practical applications, to thereby enable others skilled in the art to best use the disclosure and various described examples with various modifications as are suited to the particular use contemplated.

## Claims

1. A method comprising:
obtaining a first set of information detected using a first subset of one or more first input devices of a first electronic device while the first electronic device is in a first power state;
obtaining a second set of information detected using a first subset of one or more second input devices of a second electronic device, different from the first set of information, wherein the second electronic device is in communication with the first electronic device;
in accordance with a determination that one or more first criteria are satisfied, the one or more first criteria including a criterion that is satisfied based on the first set of information and the second set of information, causing the first electronic device to transition from the first power state to a second power state, wherein the second power state is associated with a higher power state than the first power state; and
in accordance with a determination that the one or more first criteria are not satisfied, forgoing causing the first electronic device to transition from the first power state to the second power state.

2. The method of claim 1, wherein the first power state includes operating the first electronic device without operating one or more first displays of the first electronic device and the second power state includes operating the first electronic device including operating the one or more first displays.

3. The method of any of claims 1-2, wherein operating the one or more first displays while in the second power state includes displaying a first user interface on the one or more displays of the first electronic device wherein the first user interface is based on the first set of information and the second set of information.

4. The method of any of claims 1-3, wherein transitioning from the first power state to the second power state includes activating a first application and a second subset of the one or more first input devices, different from the first subset of the one or more first input devices.

5. The method of any of claims 1-4, wherein while in the first power state and the second power state, the first electronic device forgoes activating one or more first displays of the first electronic device.

6. The method of any of claims 1-5, wherein transitioning the first electronic device from the first power state to the second power state further comprises:
activating a second subset of the one or more first input devices that were not active in the first power state; and
after activating the second subset of the one or more first input devices, detecting, via the second subset of the one or more first input devices, a third set of information, wherein the third set of information is used to inform one or more functions of the first electronic device and the second electronic device.

7. The method of any of claims 1-6, wherein the one or more first criteria include a second criterion that is satisfied based on one or more historical patterns of a user of the first electronic device.

8. The method of any of claims 1-7, wherein transitioning the first electronic device from the first power state to the second power state further comprises:
in accordance with a determination that the first set of information and the second set of information correspond to a first context, causing display, via one or more first displays of the first electronic device, of one or more first user interface elements corresponding to respective contextual information from the first set of information and the second set of information while in the second power state; and
in accordance with a determination that the first set of information and the second set of information correspond to a second context, causing display, via the one or more first displays, of one or more second user interface elements corresponding to respective contextual information from the first set of information and the second set of information while in the second power state.

9. The method of any of claims 1-8, wherein transitioning the first electronic device from the first power state to the second power state further comprises:
in accordance with a determination that the first set of information and the second set of information correspond to a first context, causing display, via one or more first displays, of one or more first user interface elements corresponding to respective non-contextual information from the first set of information and the second set of information while in the second power state; and
in accordance with a determination that the first set of information and the second set of information correspond to a second context, causing display, via the one or more first displays, one or more second user interface elements corresponding to respective contextual information from the first set of information and the second set of information while in the second power state.

10. The method of any of claims 1-10, wherein the first subset of first input devices of the one or more first input devices includes an image sensor, a hand tracking sensor, and/or a head tracking sensor.

11. An electronic device comprising:
one or more processors;
memory; and
one or more programs stored in the memory and configured to be executed by the one or more processors, the one or more programs including instructions for performing a method of any of claims 1-10.

12. A non-transitory computer readable storage medium storing one or more programs, the one or more programs comprising instructions, which when executed by one or more processors of an electronic device, cause the electronic device to perform a method of any of claims 1-10.

13. An electronic device comprising:
one or more processors;
memory; and
one or more programs stored in the memory and configured to be executed by the one or more processors, the one or more programs including instructions for performing a method of any of claims 1-10.

14. A computer system comprising:
one or more processors;
memory; and
means for performing any of the methods of claims 1-10.

15. A computer system that is in communication with one or more displays and one or more input devices, the computer system comprising:
one or more processors;
memory;
means for obtaining a first set of information detected using a first subset of one or more first input devices of a first electronic device while the first electronic device is in a first power state;
means for obtaining a second set of information detected using a first subset of one or more second input devices of a second electronic device, different from the first set of information, wherein the second electronic device is in communication with the first electronic device;
means for in accordance with a determination that one or more first criteria are satisfied, the one or more first criteria including a criterion that is satisfied based on the first set of information and the second set of information, causing the first electronic device to transition from the first power state to a second power state, wherein the second power state is associated with a higher power state than the first power state; and
means for in accordance with a determination that the one or more first criteria are not satisfied, forgoing causing the first electronic device to transition from the first power state to the second power state.
